Europäisches Patentamt

European Patent Office

Office européen des brevets

(19)

(11) Numéro de publication: **0 001 554**
**A1**

# (12) DEMANDE DE BREVET EUROPEEN

(21) Numéro de dépôt: **78100920.4**

(22) Date de dépôt: **18.09.78**

(51) Int. Cl.²: **H 01 M 6/16**
**H 01 M 4/56, C 01 G 21/02**

(30) Priorité: **23.09.77 FR 7728707**

(43) Date de publication de la demande:
**02.05.79 Bulletin 79/9**

(84) Etats contractants désignés:
**BE CH DE FR GB LU NL SE**

(71) Demandeur: S.A. dite: SAFT - SOCIETE DES
ACCUMULATEURS FIXES ET DE TRACTION
156, avenue de Metz
F-93230 Romainville(FR)

(72) Inventeur: Gabano, Jean-Paul
99, rue Condorcet
F-86000 Poitiers(FR)

(72) Inventeur: Broussely, Michel
36, rue de la Bugellerie
F-86000 Poitiers(FR)

(74) Mandataire: Weinmiller, Jürgen et al,
Zeppelinstrasse 63
D-8000 München 80(DE)

(54) **Générateur électrochimique de grande énergie spécifique comportant une matière active positive améliorée.**

(57) Générateur électrochimique dont l'électrode négative est en lithium, dont l'électrolyte est une solution dont le solvant est un composé aprotique et dont la matière active positive est formée de particules d'oxydes de plomb de formule $PbO_x$.

Selon l'invention, pour au moins une partie substantielle des particules, x est inférieur à 1,87 et supérieur ou égal à 1,4.

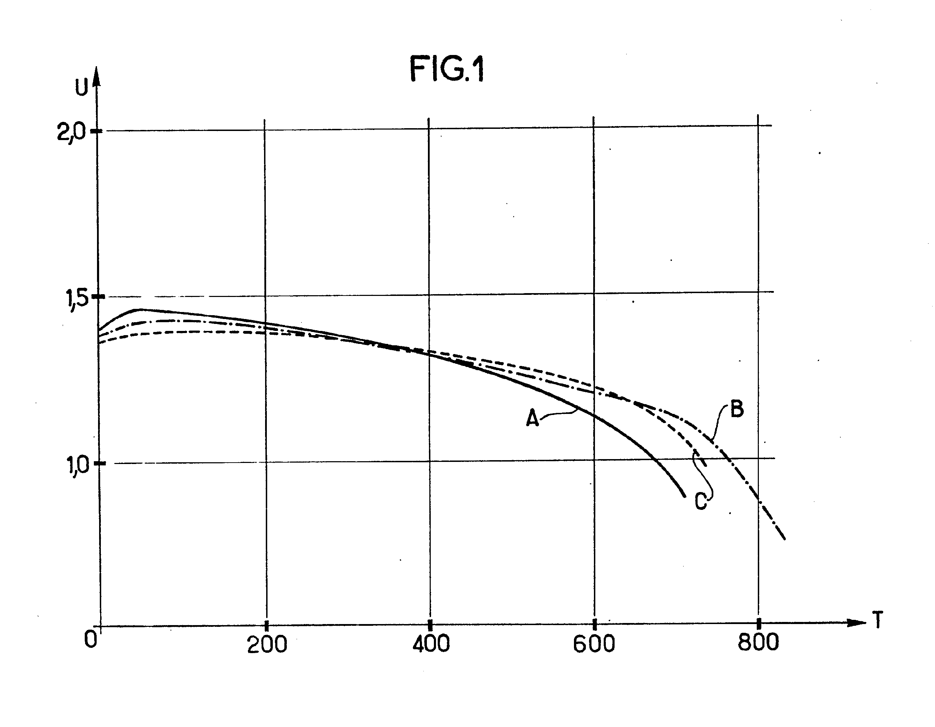

On obtient ainsi un générateur de grande énergie spécifique, présentant un seul palier de décharge (courbe B et C, figure 1).

FIG.1

Générateur électrochimique de grande énergie spécifique comportant une matière active positive améliorée

La présente invention concerne les générateurs électrochimiques de grande énergie spécifique ayant comme matière active négative un métal alcalin, de préférence le lithium. Elle concerne plus spécialement la matière active positive de ceux-ci.

Il a été proposé, depuis au moins 1960, d'utiliser des oxydes de plomb comme matière active positive de générateurs électrochimiques dont la matière active négative est constituée, entre autres, par du lithium, voir par exemple le brevet américain n° 2 937 219. Plus récemment le brevet français n° 74 34 867 (publié sous le n° 2 288 401) et son addition n° 75 20 497 (publiée sous le n° 2 316 756) ont décrit des piles au lithium dont la matière active positive était constituée par les oxydes de plomb de formule PbO ou $Pb_3O_4$.

Il serait cependant séduisant d'utiliser plutôt comme matière active le peroxyde de plomb $PbO_2$, qui a une capacité spécifique théorique supérieure à celle de $Pb_3O_4$ et à plus forte raison PbO. Le peroxyde de plomb est d'ailleurs proposé comme matière active dans le brevet américain mentionné ci-dessus n° 2 937 219. Cependant le peroxyde de plomb a l'inconvénient de se décharger sur deux paliers ce qui est un inconvénient dans de nombreux cas.

Le but de l'invention est d'obtenir un générateur électrochimique dont la matière active positive a une plus grande capacité spécifique que le minium $Pb_3O_4$, tout en ayant un seul palier de décharge.

Elle a pour objet un générateur électrochimique dont l'électrode négative est en lithium, dont l'électrolyte est une solution dont le solvant est un composé aprotique et dont la matière active positive est formée de particules d'oxyde de plomb de formule $PbO_x$, caractérisé par le fait que x est inférieur à 1,87 et supérieur ou égal à 1,4.

Une telle matière active positive peut être obtenue par réduction ménagée du peroxyde de plomb $PbO_2$, par exemple au moyen d'un traitement thermique approprié.

Lors de la réduction de $PbO_2$, tant que x reste supérieur ou égal à 1,87, $PbO_x$ garde la structure cristalline de $PbO_2$ et comporte une seule phase non stoechiométrique. Lorsque x devient inférieur à 1,87, apparaissent dans le diagramme de rayon X les raies caractéristiques de l'oxyde $Pb_2O_3$. On a donc un mélange de $Pb_2O_3$ et de $PbO_2$ non stoechiométrique. Pour x = 1,5, $PbO_x$ est constitué essentiellement par la phase $Pb_2O_3$, et pour x < 1,5 par un mélange de $Pb_2O_3$ et de $Pb_3O_4$.

La matière active selon l'invention se signale donc par la présence dans son diagramme de rayons X des raies de $Pb_2O_3$, avec une intensité plus ou moins importante selon que x est plus ou moins voisin de 1,5, et ceci pour chacune des particules constituant la matière active, ou au moins pour une partie substantielle d'entre elles.

On constate que dans ces conditions la décharge du générateur se fait sur un seul palier. Si au contraire on mélangeait par exemple les oxydes $PbO_2$ et $Pb_3O_4$, on obtiendrait une matière active dans laquelle certaines particules seraient formées de la seule phase $PbO_2$ et on retrouverait les deux paliers de décharge.

De préférence, x est choisi inférieur ou égal à 1,8, de telles valeurs pouvant plus facilement être obtenues de façon homogène par traitement thermique.

A titre d'exemples, on a obtenu $PbO_{1,8}$ en chauffant $PbO_2$ à 380°C pendant 30 mn, et $PbO_{1,5}$ en chauffant à 390°C pendant 2 heures. Bien entendu, la durée de traitement à température donnée pour obtenir une composition donnée dépend de la granulométrie du produit de départ et des autres conditions opératoires.

La mise en oeuvre de la matière active positive selon l'invention est analogue à celle qui a été décrite dans le brevet n° 74 34 867 et son addition 75 20 497, ci-dessus mentionnés. Ainsi un conducteur électronique est mélangé à la matière active ; avantageusement ce conducteur est un de ceux qui sont mentionnés dans le brevet ci-dessus, à savoir choisi dans le groupe formé par le plomb, le zinc, l'étain, l'or, le bismuth, le cadmium et leurs alliages, les trois premiers métaux étant préférés.

L'électrolyte est une solution dont le solvant peut être un éther, ou un ester ou des mélanges d'éthers et d'esters. Parmi les éthers utilisables on peut citer le dioxolanne, le tétrahydrofuranne, le diméthoxyéthane, ou leurs mélanges et parmi les esters le formiate de méthyle, le sulfite de diméthyle, le carbonate de propylène, le carbonate d'éthylène etc. Il faut noter que les oxydes de plomb pouvant être légèrement solubles dans certains esters, ceux-ci doivent être employés avec certaines précautions, par exemple dans des piles amorçables.

Le soluté de l'électrolyte est de préférence un sel de lithium tel que le perchlorate. D'autres sels de lithium pouvant également convenir sont le tétrafluoborate, le fluorométhyl sulfonate ($LiCF_3SO_3$), l'hexafluoroarséniate.

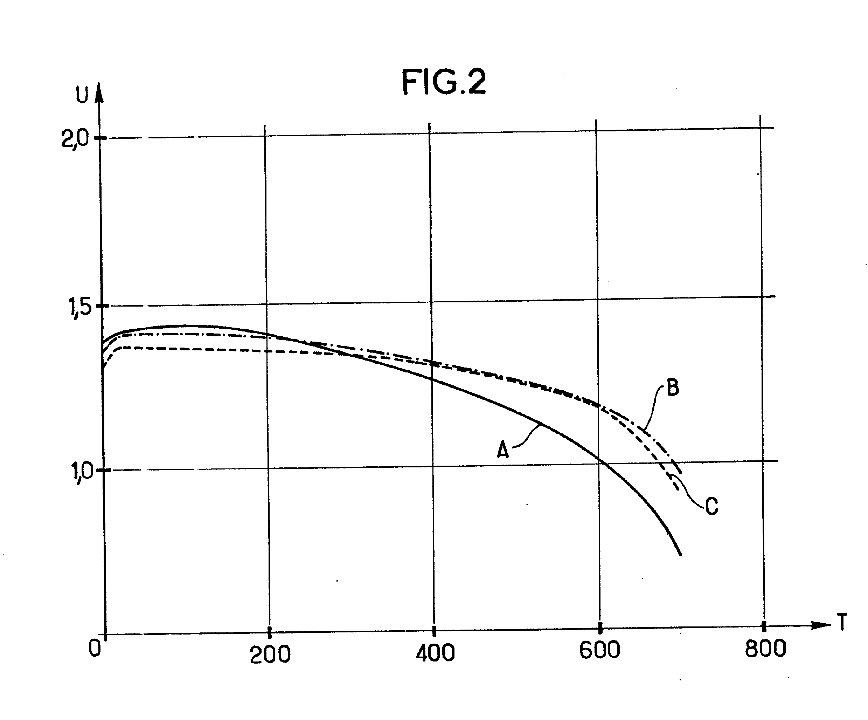

L'invention sera mieux comprise à l'aide des exemples suivants illustrés par le dessin annexé dans lequel les figures 1 et 2 représentent la décharge de 3 piles, une pile selon la technique antérieure et deux piles selon l'invention.

Les trois piles sont identiques à la matière active positive près. Elles sont du type bouton, de diamètre extérieur 11,6 mm et de hauteur totale 5,4 mm. Le boîtier se compose de deux coupelles en acier nickelé séparées par un joint qui sert à l'étanchéité et à l'isolement électrique des coupelles entre elles. La coupelle négative contient le lithium, qui est une feuille incrustée sur un collecteur constitué par une grille en acier nickelé soudé à la coupelle. La coupelle positive contient la masse active positive, et un séparateur constitué par plusieurs couches de papier et feutre cellulosique, imbibé d'électrolyte, est interposé entre le lithium et la masse positive. L'électrolyte est une solution 2M de perchlorate de lithium dans le dioxolanne.

La masse positive a la composition suivante : pour 9 g d'oxyde de plomb, il y a 2,84 g de plomb pulvérulent et 0,50 g de polytétrafluoréthylène. Le tout est mélangé, tamisé puis comprimé dans la coupelle positive sous une pression de 1,5 tonnes/cm$^2$, la

quantité de masse étant telle que la hauteur de la cathode soit de 1,35 mm. Le volume et la pression sont donc les mêmes pour les cathodes des trois piles.

L'une des piles, A, a pour oxyde de plomb le minium $Pb_3O_4$ (x = 1,33) qui correspond à la technique décrite dans le brevet français et son addition mentionnés ci-dessus. Une autre pile, B, a pour oxyde le sesquioxyde de plomb $Pb_2O_3$ ( x = 1,5) et la troisième pile, C, a pour oxyde un métaplombate non stoéchiométrique $PbO_{1,8}$ ( x = 1,8). Les piles B et C sont donc des piles selon l'invention.

La figure 1 donne la décharge des trois piles sur une résistance de 5000 ohms, et les courbes ont été désignées par les références des piles. La figure 2 donne la décharge de piles analogues, mais, alors que les piles de la figure 1 étaient à l'état frais, les piles de la figure 2 ont été conservées, avant décharge, pendant un mois à 45°C. Sur ces figures, on a porté en abscisses le temps T en heures, et en ordonnées la tension U en volts.

Le tableau ci-dessous donne les capacités théoriques, les capacités à l'état frais (tension d'arrêt, 2 volts) et les capacités après stockage de 1 mois des 3 piles, d'où l'on déduit les rendements et les pertes de capacité en pourcentage au stockage.

| Piles | Capacité théorique | Capacité état frais | Rendement état frais | Capacité ap. stock | Rendement ap. stock | Perte au stockage |
|---|---|---|---|---|---|---|
| | mAh | mAh | % | mAh | % | % |
| A | 148 | 145 | 98 | 124 | 84 | 14,5 |
| B | 185 | 163 | 88 | 157 | 85 | 3,7 |
| C | 221 | 163 | 74 | 155 | 70 | 5 |

On voit que, si le rendement du minium (pile A) est le meilleur à l'état frais, celui du sesquioxyde (pile B) le dépasse en conservation. De plus on voit nettement sur les figures qu'à volume et pression constants, la capacité des piles B et C selon l'invention est plus grande que celle de la pile A et que la tension des piles B et C reste plus constante puisque la tension de la pile A après avoir été supérieure à celles des piles B et C dans la première partie de la décharge passe au-dessous.

Bien entendu, l'invention n'est nullement limitée aux modes de réalisation décrits qui n'ont été donnés qu'à titre d'exemples.

0001554

REVENDICATIONS

1. Générateur électrochimique dont l'électrode négative est en lithium, dont l'électrolyte est une solution dont le solvant est un composé aprotique, et dont la matière active positive est formée de particules d'oxyde de plomb de formule $PbO_x$, caractérisé par le fait que x est inférieur à 1,87 et supérieur ou égal à 1,4.

2. Générateur électrochimique selon la revendication 1, caractérisé par le fait que x est inférieur ou égal à 1,8.

3. Générateur électrochimique selon la revendication 2, caractérisé par le fait que x est voisin de 1,5.

4. Générateur selon l'une des revendications précédentes, caractérisé par le fait que la matière active est obtenue par chauffage de particules de peroxyde de plomb $PbO_2$.

5. Générateur électrochimique selon l'une des revendications précédentes caractérisé par le fait que la matière active positive est additionnée d'un conducteur électronique.

6. Générateur électrochimique selon la revendication 5, caractérisé par le fait que le conducteur électronique est choisi dans le groupe formé par le plomb, le zinc, l'étain, l'or, le bismuth, le cadmium et leurs alliages.

7. Générateur électrochimique selon l'une des revendications précédentes caractérisé par le fait que le solvant de l'électrolyte est choisi dans le groupe constitué par le dioxolanne, le tétrahydrofuranne, le diméthoxyéthane, le formiate de méthyle, le sulfite de diméthyle, le carbonate de propylène, le carbonate d'éthylène et leurs mélanges.

0001554

8. Générateur électrochimique selon l'une des revendications précédentes caractérisé par le fait que le soluté de l'électrolyte est un sel de lithium choisi dans le groupe constitué par le perchlorate, le tétrafluoborate, le fluorométhyl sulfonate, l'hexafluoroarséniate.

# FIG.1

0001554

FIG.2

| Catégorie | Citation du document avec indication, en cas de besoin, des parties pertinentes | Revendication concernée | CLASSEMENT DE LA DEMANDE (Int. Cl.²) |
|---|---|---|---|
| | <u>US - A - 4 048 402</u> (M.L. KRONEN-BERG)<br><br>\* Revendications 1,2,9; colonne 2, lignes 32-36; exemple 3 \*<br><br>-- | 1,5,7,8 | H 01 M 6/16<br> 4/56<br>C 01 G 21/02 |
| A | <u>FR - A - 2 320 640</u> (VARTA)<br><br>\* Revendications 1-3 \*<br><br>-- | | |
| A | <u>FR - A - 2 302 596</u> (UNION CARBIDE)<br><br>\* Exemple 5; page 15 \*<br><br>-- | | DOMAINES TECHNIQUES RECHERCHES (Int. Cl.²)<br><br>H 01 M 4/56<br> 4/48<br> 4/36<br> 6/16 |
| P | Revue GB ELECTROCHIMICA ACTA, vol. 22, pages 1141-1145, octobre 1977 Pergamon Press Great Britain G. PISTOLA et U. MANCINELLI: "Lead compounds as cathode materials for lithium cells"<br><br>\* Page 1144 \* | 1 | |

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 08-12-1978 | D'HONDT |

OEB Form 1503.1 06.78